# EUROPÄISCHE PATENTSCHRIFT

(11) **EP 1 031 277 B1**
(45) Veröffentlichungstag und Bekanntmachung des Hinweises auf die Patenterteilung: **15.08.2007**
(21) Anmeldenummer: 00103926.2
(22) Anmeldetag: 24.02.2000
(51) Int. Cl.: A01K 1/015, A01K 13/00

(54) **Hygienevorrichtung**
Hygiene device
Appareil d'hygiène

(30) Priorität: 24.02.1999 DE 29903099 U
(43) Veröffentlichungstag der Anmeldung: 30.08.2000
(73) Patentinhaber: AGROTEL GmbH, 94152 Neuhaus/Inn (DE)
(72) Erfinder: Laner, Cyriak, 94152 Neuhaus/Inn (DE)
(74) Vertreter: Benninger, Johannes

(56) Entgegenhaltungen:
- EP-A- 0 060 148
- EP-A- 0 764 422
- DE-A- 2 639 289
- GB-A- 2 268 399

## Beschreibung

Die Erfindung betrifft eine Hygienevorrichtung zur Reinigung der Hufe bzw. Klauen oder Füßen von darüber gehenden Tieren oder Personen, mit einer flüssigkeitsgetränkten oder Flüssigkeiten aufsaugenden Matte, insbesondere einer Schaumstoffmatte, nach dem oberbegriff des Anspruches 1.

Eine derartige Hygienevorrichtung in der Form einer mikrobiologische wirksamen Matte zur Verwendung im Eingangsbereich einer Reinigungszone ist aus der EP-A-0764422 bekannt geworden. Diese Matte weist einen flüssigkeitsaufnehmenden Mattenkörper und einen darin getränkten alkalischen Stoff auf, der als mikrobiologische Wirksubstanz dient. Diese Hygienevorrichtung ist eher für den Einsatz bei Reinräumen, Laboren, und dergleichen reinheitsempfindlicher Bereiche für Personen geeignet, jedoch nicht für Anwendungen in der Viehzucht.

Bei der Vieh- und Tierhaltung stellt die Hygiene und Desinfektion der oft mit Keimen oder Schmutz verunreinigten Hufe oder Klauen des Viehs und auch der Schuhe, insbesondere der Stiefel, der Tierhalter bzw. -pfleger ein Problem dar.

Bisher wurden meistens in den Boden eingelassene Wannen bzw. Gruben oder dergleichen verwendet, die mit einem Reintgungs-und/oder Desinfektions-Mittel gefüllt waren und die zur Desinfektion oder Reinigung zu Durchlaufen waren.

Weiterhin gibt es auf dem Markt sogenannte Hygiene-Matten, die ein Reinigungs- und/oder Desinfektions-Mittel enthalten, das während des darüber Laufens des Viehs oder des Personals die Hufe bzw. Klauen oder der Schuhe mit dem Mittel umspült bzw. in Kontakt bringt.

Solche Matten bestehen aus einer flüssigkeitsdichten, oben offenen, eine Art Wanne bildenden beschichteten Plane, die an ihren Enden hochgeschlagen und dergestalt vernäht ist, dass eine auf der beschichteten Plane liegendende flüssigkeitsgetränkte oder Flüssigkeiten aufsaugenden Schaumstoffmatte nach der Unterseite und nach den Seiten hin eingeschlagen bzw. ummantelt ist. Auf der nach oben zugänglichen Seite der Schaumstoffmatte ist ein Gittergewebe vorgesehen, so dass die Schaumstoffmatte vollständig durch die Plane und das Gittergewebe umschlossen und in diese eingenäht ist.

Die Schaumstoffmatte (Saugschicht) wird mit Flüssigkeit (Desinfektionsmittel, Behandlungsmittel oder Heillösung) getränkt. Beim Betreten der Matte und durch das damit verbundene Zusammenpressen des Schaumstoffes wird die Klaue oder der Fuß mit der Flüssigkeit in Form einer kleinen Lache umhüllt.

Beim Auftreten auf die Matte kommt es nicht zu einer sofortigen seitlichen Verdrängung der Flüssigkeit, sondern dieselbe wird nach oben gedrückt, und somit wird eine Umspülung zwischen den Klauenspalten oder Zehen erreicht. Hierdurch wird besonders die Behandlung dieser Zwischenspalten ermöglicht.

Ein Nachteil solcher Hygienematten liegt darin, dass durch ein ungünstiges Auftreten auf der Matte die Enden durch das Gittergewebe hochgezogen werden können, und die so hochstehenden Enden eine Stolperquelle darstellen.

Ein weiterer Nachteil solcher Hygienematten liegt darin, dass die Matte bei Abnutzung des Schaumstoffes vollständig erneuert werden muss und insbesondere darin, dass eine Reinigung der Matten nur oberflächlich durchführbar ist. Ein Wechsel der Heil- oder Behandlungslösung ist nicht vollständig möglich. Hierdurch ist eine Matte im ungünstigsten Fall nur einmal verwendbar.

Der Erfindung liegt die Aufgabe zugrunde, eine gegenüber dem Stand der Technik verbesserte Hygienevorrichtung zur Verfügung zu stellen, die oben genannten Nachteile überwindet und insbesondere eine Reinigung ermöglicht.

Diese Aufgabe wird durch eine Hygienevorrichtung nach Anspruch 1 gelöst.

Erfindungsgemäß ist die Matte der Hygienevorrichtung wenigstens an der Unterseite und an den Seiten wenigstens teilweise durch eine flüssigkeitsdichte flexible Sperr-schicht und eine flüssigkeitsdurchlässige flexible Durchtritts-Schicht umgeben, und die Matte auf der flexiblen Sperr-Schicht mit einer lösbaren Verbindung befestigt.

Durch die erfindungsgemäße Hygienevorrichtung wird ein sicheres Liegen der Matte auf dem Untergrund gewährleistet, wobei die Hygienevorrichtung durch die ab/herausnehmbare Matte einfach zu Reinigen ist. Hierdurch wird die Lebensdauer der Hygienevorrichtung erheblich verlängert. Ein flexibler Einsatz der Hygienevorrichtung ist nun möglich. Bei Abnutzung der Matte, insbesondere einer Schaumstoffmatte, ist nicht mehr die gesamte Hygienevorrichtung zu ersetzen, sondern es muss lediglich die Matte erneuert werden, was ein erhebliches Kosteneinsparungspotenzial darstellt.

Vorteilhafterweise ist die Sperr-Schicht an den Seiten der Matte durch mit einem flexiblen Material gefüllte Stabilisationskammern gebildet. Dadurch bleibt die Matte in gefülltem Zustand beim Betreten stabil liegen, verrutscht nicht und die seitlichen Ränder werden beim Betreten nicht hochgezogen. Von Vorteil werden die Stabilisationskammern mit einem Schaumstoff und/oder mit Wasser gefüllt.

Dem folgend weisen die Stabilisationskammern eine Befüll- und Entleereinrichtung auf. Hierdurch sind die Stabilisationskammern dauerhaft aber auch reversibel zu befüllen.

Bevorzugt ist die Matte nach zwei gegenüberliegenden Enden mit einer lösbaren Verbindung, insbesondere eines KlettVerschlusses, mit der darunter liegenden Sperr-Schicht verbindbar. Hierdurch ist die Matte von der Sperr-Schicht lösbar ausgestaltet und kann leicht gereinigt oder ausgetauscht werden.

Eine weitere vorteilhafte Ausgestaltung sieht vor, dass wenigstens ein, insbesondere vier, Eingriffe bzw. Haltegriffe in der Sperr-Schicht vorgesehen sind. Hierdurch lässt sich die Hygienematte einfach transportieren und handhaben.

Vorteilhafterweise besteht die Hygienematte aus einer Planenwanne, gebildet aus der Sperr-Schicht, auf bzw. in der sich die Matte aus Schaumstoff befindet, wobei die Matte wenigstens nach oben hin mit einem Gittergewebe überzogen ist, und wobei die Matte mit der Sperr-Schicht Hilfe eines Klettverschlusses verbunden wird.

Weitere Vorteile, Besonderheiten und zweckmäßige Weiterbildungen der Erfindung ergeben sich aus den Unteransprüchen.

Ein bevorzugtes Ausführungsbeispiel der Erfindung wird nachfolgend anhand der Zeichnung erläutert. Es zeigt:

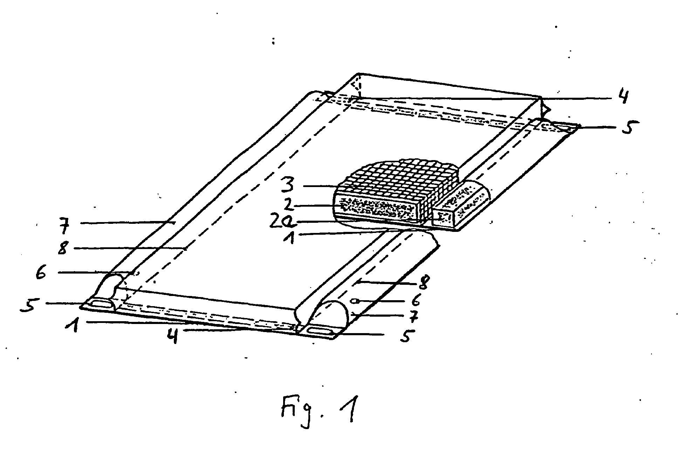

Figur 1 eine Ansicht einer erfindungsgemäßen Hygienematte.

Das in Figur 1 dargestellte Ausführungsbeispiel einer erfindungsgemäßen Hygienevorrichtung 1 umfasst eine Planenwanne 1, welche den Boden für die Behandlungsmatte 2 und den Stabilisationskammern 7 sowie auch die Ummantelung von Matte 2 und Kammern 7 bildet. Das dafür verwendete Material besteht aus einem beschichteten oder dergleichen wasserundurchlässigen Gewebe. Die Matte 2 dient als Saugschicht 2 und nimmt etwa 70 bis 80 % der Gesamtfläche der Hygienevorrichtung 1 ein. Die Matte 2 hat eine Stärke von etwa 2 bis 10 cm und besteht aus Schaumstoff, welcher zwischen der Planenwanne 1 und einer Oberschicht 3 aus einem Gittergewebe hineingeschoben wird. Die Oberschicht 3 (Gittergewebe) schützt den Schaumstoff 2 vor stärkerer Verschmutzung, vor einer zu großen mechanischen Abnutzung, gibt Rutschsicherheit und lässt beim Betreten Flüssigkeit nach oben entweichen, um die Behandlungsfunktion zu erzielen. Das Gittergewebe 3 hat an beiden Breitseiten einen Klettverschluss 4, der an der Unterseite der Planenwanne 1 sein Gegenstück hat und dadurch das Herausnehmen, Reinigen oder Ersetzen des Schaumstoffes 2 leicht durchzuführen ist. Um die Stabilität und keine Verformung, Erhöhung der Längsseiten oder Ecken beim Betreten der Matte zu bewirken, somit ein stabiles Liegenbleiben am vorgesehenen Platz zu erreichen, sind beidseits an den Längsseiten die bereits erwähnten Stabilisationskammern 7 in die Behandlungsmatte eingebunden. Diese bestehen aus einem Schaumstoffkern 2a und einer Planenhülle 1, welche der Länge nach dicht mit der Planenwanne 8 verschweißt ist. Zur Befüllung mit Wasser ist an der Unterseite jeder Stabilisationskammer 7 eine etwa 30 mm große Öffnung 6 eingeschweißt, welche mit einem Schraubpfropfen verschlossen werden kann. An den Enden der Stabilisationskammern 7 sind insgesamt vier Griffe 5 eingearbeitet, um das "Handling" der Hygienevorrichtung zu erleichtern.

### Bezugszeichenliste

- 1: Planenwanne: Boden der Behandlungsmatte und der Stabilisationskammern sowie komplette Umwandung dieser
- 2, 2a: Schaumstoff in unterschiedlichen Abmessungen, Stärke ca. 2 bis 10 cm
- 3: Gittergewebe durchlässig hinten und vorne mit Klettverschluss versehen
- 4: Klettverschluss - eine Seite auf Gittergewebe und eine Seite auf Planenwanne befestigt
- 5: Haltegriffe in verstärkter Planenwanne eingearbeitet
- 6: Befülleinrichtung für Stabilisationskammern mit verschraubbarem Verschluss
- 7: Stabilisationskammern mit dichter Planenhülle und Schaumstoffkern
- 8: Wasserdichte Schweißnaht

## Patentansprüche

1. Hygienevorrichtung zur Reinigung der Hufe bzw. Klauen oder Füßen von darüber gehenden Tieren oder Personen, mit einer flüssigkeitsgetränkten oder Flüssigkeiten aufsaugenden Matte (2), insbesondere einer Schaumstoffmatte, wobei die Matte (2) wenigstens an der Unterseite und an den Seiten wenigstens teilweise durch eine flüssigkeitsdichte flexible Sperr-Schicht (1) und eine flüssigkeitsdurchlässige flexible Durchtritts-Schicht(3) umgeben ist, und die Matte (2) auf der flexiblen Sperr-Schicht(1) mit einer lösbaren Verbindung (4) befestigt ist,
**dadurch gekennzeichnet,**
**dass** die Sperr-Schicht(1) an den Seiten der Matte(2) durch mit einem flexiblen Material gefüllte Stabilisationskammern (7) gebildet ist.

2. Hygienevorrichtung nach Anspruch 1,
**dadurch gekennzeichnet, dass** die flexible Durchtritts-Schicht (3) durch ein Gittergewebe gebildet ist.

3. Hygienevorrichtung nach einem der Ansprüche 1 oder 2,
**dadurch gekennzeichnet,**
**dass** die Matte (2) nach zwei gegenüberliegenden Seitenflächen hin durch die Sperr-Schicht (1) eingegrenzt ist.

4. Hygienevorrichtung nach einem der Ansprüche 1 bis 3,
**dadurch gekennzeichnet,**
**dass** die Matte (2) nach zwei gegenüberliegenden Enden mit einer lösbaren Verbindung (4), insbesondere eines Klett-Verschlusses, mit der darunter liegenden Sperr-Schicht (1) verbindbar ist.

5. Hygienevorrichtung nach einem der Ansprüche 1 bis 4,
**dadurch gekennzeichnet,**
**dass** die Stabilisationskammern (7) eine Befüll- und Entleereinrichtung (6) aufweisen.

6. Hygienevorrichtung nach einem der Ansprüche 1 bis 5,
**dadurch gekennzeichnet,**
**dass** wenigstens ein, insbesondere vier, Eingriffe bzw. Haltegriffe (5) in der Sperr-schicht (1) vorgesehen sind.

## Claims

1. A hygiene device for cleaning the hoofs or claws or feet of animals or persons walking over it, comprising a liquid-saturated or liquid-absorbing mat (2), in particular a foam mat, with the mat (2) being surrounded at least in part, at least on the underside and on the sides, by a liquid-proof flexible barrier layer (1) and a liquid-permeable flexible permeation layer (3), and the mat (2) being secured with a separable connection (4) to the flexible barrier layer (1),
**characterized in that**
the barrier layer (1) on the sides of the mat (2) is formed by stabilization chambers (7) which are filled with a flexible material.

2. The hygiene device according to Claim 1,
**characterized in that**
the flexible permeation layer (3) is formed by a mesh fabric.

3. The hygiene device according to one of Claims 1 to 2,
**characterized in that**
the mat (2) is delimited by the barrier layer (1) toward two opposed side surfaces.

4. The hygiene device according to one of Claims 1 to 3,
**characterized in that**,
toward two opposed ends, the mat (2) can be connected to the barrier layer (1) under it by a separable connection (4), in particular a Velcro fastener.

5. The hygiene device according to one of Claims 1 to 4,
**characterized in that**
the stabilization chambers (7) have a filling and evacuation equipment (6).

6. The hygiene device according to one of Claims 1 to 5,
**characterized in that**
at least one and in particular four grips or handles (5) are provided in the barrier layer (1).

## Revendications

1. Dispositif hygiénique pour le nettoyage du sabot ou des griffes ou des pieds d'animaux ou de personnes qui le piétinent, avec une natte (2) humectée de liquide ou absorbant des liquides, en particulier une natte en mousse, étant donné que la natte (2) est entourée à sa partie inférieure et à ses côtés au moins partiellement par une couche de barrage (1) flexible et étanche aux liquides et une couche perméable (3) flexible et perméable aux liquides, et que la natte (2) est fixée sur la couche de barrage (1) flexible par une liaison (4) amovible,
**caractérisé en ce que**
la couche de barrage (1) est formé sur les côtés de la natte (2) par des chambres de stabilisation (7) remplies d'un matériau flexible.

2. Dispositif hygiénique selon la revendication 1,
**caractérisé en ce que**
la couche perméable (3) flexible est formée par un tissu en treillis.

3. Dispositif hygiénique selon l'une quelconque des revendications 1 ou 2,
**caractérisé en ce que**
la natte (2) est délimitée sur deux faces latérales opposées par la couche de barrage (1).

4. Dispositif hygiénique selon l'une quelconque des revendications 1 à 3,
**caractérisé en ce que**
la natte (2) peut être raccordée sur deux extrémités opposées avec une liaison amovible (4), en particulier une fermeture Velcro, avec la couche de barrage (1) située au-dessous d'elle.

5. Dispositif hygiénique selon l'une quelconque des revendications 1 à 4,
**caractérisé en ce que**
les chambres de stabilisation (7) présentent un équipement de remplissage et de vidange (6).

6. Dispositif hygiénique selon l'une quelconque des revendications 1 à 5,
**caractérisé en ce que**
au moins un, en particulier quatre manettes ou poignées de maintien (5) sont prévue(s) dans la couche de barrage (1).
